# EUROPÄISCHE PATENTSCHRIFT

(11) **EP 2 081 717 B1**
(45) Veröffentlichungstag und Bekanntmachung des Hinweises auf die Patenterteilung: **09.02.2011**
(21) Anmeldenummer: 07817727.6
(22) Anmeldetag: 24.10.2007
(51) Int. Cl.: B23B 31/28

(54) **ELEKTROSPANNER**
ELECTRICAL STRESSING MEANS
ORGANE DE SERRAGE ÉLECTRIQUE

(30) Priorität: 28.10.2006 DE 102006050918
(43) Veröffentlichungstag der Anmeldung: 29.07.2009
(73) Patentinhaber: Röhm GmbH, 89567 Sontheim (DE)
(72) Erfinder: TAGLANG, Johann, 89441 Medlingen (DE); KUSNIK, Thorsten, 89431 Bächingen (DE)
(74) Vertreter: Hentrich, Swen
(86) Internationale Anmeldenummer: PCT/DE2007/001893
(87) Internationale Veröffentlichungsnummer: WO 2008/052513

(56) Entgegenhaltungen:
- EP-A- 0 548 400
- WO-A-99/51380
- DE-A1- 3 218 083
- DE-A1- 10 120 939
- DE-A1- 19 823 823

## Beschreibung

Die Erfindung betrifft einen Elektrospanner mit einem an der Arbeitsspindel einer Werkzeugmaschine befestigbaren Gehäuse, in dem axial verstellbar eine Gewindestange zur Verstellung der Spannbacken eines Spannfutters gelagert ist, und mit einem elektrischen Stellmotor, dessen Rotor in Antriebsverbindung mit einem Antriebsrad steht.

Zur Betätigung der Spannbacken eines an einer Werkzeugmaschine angeordneten Spannfutters dienen in der Praxis derzeit Spannzylinder, wie diese beispielsweise aus der DE 198 23 823 C2 der Anmelderin bekannt sind. Diese Spannzylinder werden hydraulisch betätigt, um aus der axialen Verstellung eines mit einer Zugstange verbundenen Kolbens die radiale Verstellung der Spannbacken im Spannfutter abzuleiten.

Die herkömmlichen hydraulisch betätigbaren Schwenkspannzylinder werden entweder direkt auf einem Maschinentisch oder in einer Spannvorrichtung angeordnet, wobei sie mit umlaufen und die Spannkraft auf der Arbeitsspindel abstützen. Bei einem Ausfall der Spannungsversorgung können über Sicherheitsventile die Spannkräfte über eine gewisse Zeit gehalten werden. Allerdings können diese Spannzylinder weder mit einer hohen Genauigkeit positioniert werden, noch können die Spannkräfte mit einer hohen Genauigkeit eingestellt werden, so das die Verwendbarkeit dieser Spannzylinder als automatisiert einstellbare Abstützeinheiten eingeschränkt ist.

Im Stand der Technik sind Bemühungen beschrieben, wie beispielsweise in der DE 32 18 083 C2, die als nächstligenden Stand der Technik bezüglich des Gegenstandes des Anspruchs 1 angesehen wird, derartige hydraulisch betätigte Spannzylinder durch Elektrospanner zu ersetzen, bei denen die Verstellung der Zugstangen nicht druckmittelbetätigt, sondern mittels eines Elektromotors erfolgt. Diese Elektrospanner haben sich bisher in der Praxis nicht durchgesetzt und liegen lediglich als Prototypen vor, da diese Elektrospanner einen sehr aufwändigen Aufbau aufweisen müssen, um die in jedem System erforderliche Nachspannung gewährleisten zu können. Nachteilig ist außerdem, dass bei bisher bekannten Elektrospannern in der Regel ein sehr großer Energieaufwand erforderlich ist.

Weiterhin werden im Stand der Technik, wie zum Beispiel der DE 101 20 939 B4, elektromechanisch betriebenen Greifvorrichtungen beschrieben, die allerdings den Nachteil geringer Spannkräfte aufweisen. Bei Ausfall der Spannungsversorgung kann die Spannkraft nicht aufrecht erhalten werden.

Des Weiteren sind elektromagnetischen Greifvorrichtungen bekannt, die allerdings auch den Nachteil geringerer Haltekräfte aufweisen und bei denen auch nach einem Ausfall der Spannungsversorgung die Spannkraft nicht aufrecht erhalten kann. Zusätzlich ziehen diese Magnetspanner Metallspäne und Metallstaub beim Spannen an, wodurch Probleme bei der Positionierung verursacht werden können oder sogar Abdrücke dieser Partikel auf die Werkstücke eingebracht werden können.

Der Erfindung liegt daher die Aufgabe zugrunde, einen Elektrospanner der eingangs genannten Art so auszubilden, dass mittels eines direkten elektrischen Anschlusses auf einfache Weise eine axiale Spannkraft für Spannmittel an Arbeitsspindeln erzeugt werden kann unter Gewährleistung einer Einstellbarkeit der Spannkraft auch während der Drehbewegung der Arbeitsspindel.

Diese Aufgabe ist durch die Merkmale des Anspruchs 1

Ein derartiger Elektrospanner weist einige bemerkenswerte Vorteile auf. So wird das durch den Stellmotor zu erzeugende kleine Drehmoment bei großen Drehzahlen des Stellmotors aufgrund der Übersetzung in dem Gleitkeilgetriebe (harmonic drive) in niedrige Drehzahlen und ein hohes Drehmoment an der Spindelmutter umgewandelt. Als besonders vorteilhaft hat sich bei dem Gleitkeilgetriebe (harmonic drive) eine Übersetzung von 20 bis 200 zu 1 erwiesen.

Da weiterhin das Hohlrad fest mit dem Gehäuse verbunden ist, arbeitet die eine Außenverzahnung aufweisende Stahlbüchse (Flexspline) in umgekehrter Drehrichtung zur Arbeitsspindel und zum Stellmotor als Antrieb für die Spindelmutter. Diese bewegt dann die Gewindestange in axiale Richtung vor bzw. zurück und spannt oder löst das Spannfutter. Läuft nun die Arbeitsspindel mit der Arbeitsdrehzahl, so rotiert der Elektrospanner mit derselben Drehzahl mit, da das Gehäuse an der Arbeitsspindel befestigt ist. Das bedeutet auch, dass das Antriebsrad und damit auch der Rotor des Stellmotors in derselben Drehzahl der Arbeitsspindel mitlaufen. Da der Stellmotor auf sehr hohe Drehzahlen ausgelegt ist, erzeugt er bei den vergleichsweise geringen Drehzahlen der Arbeitsspindel nur einen geringen Strom, so dass das niedrige Drehmoment die Arbeitsspindel nicht beeinflusst. Dieses geringe Drehmoment bewirkt aber durch die Umkehrung der Bewegungsrichtung der Spindelmutter eine Nachspannung im Spannfutter.

Bei einem Ausfall der Spannungsversorgung wird das Drehmoment des Stellmotors zum Abbremsen der Drehbewegung der Arbeitsspindel ausgenutzt, so dass durch die Umkehr der Drehbewegung bezüglich der Spindelmutter dieses Drehmoment zum sicheren Spannen des Spannfutters bis zum Stillstand der Arbeitsspindel zur Verfügung steht.

Zur Erzielung einer kurzen Baulänge des Elektrospanners ist weiterhin vorgesehen, dass der Elektromotor seitlich neben dem Gehäuse angeordnet ist, wobei dann vorzugsweise der Elektromotorüber über einen Riementrieb mit dem Antriebsrad verbunden ist; jede andere Verbindung, beispielsweise, über Zahnräder ist dabei selbstverständlich gleichfalls denkbar.

Außerdem ist im Rahmen der Erfindung vorgesehen, dass die eine Außenverzahnung aufweisende Stahlbüchse (Flexspline) über eine Klauenkupplung mit der Spindelmutter gekuppelt ist, die mit einem Spiel versehen sein kann, um bei Spannfuttern mit Selbsthemmung durch den entstehenden Schlag das Öffnen zu erleichtern.

Alternativ kann die eine Außenverzahnung aufweisende Stahlbüchse (Flexspline) starr mit der Spindelmutter gekuppelt sein, wodurch eine hohe Positionsgenauigkeit erreicht wird.

Ganz besonders bevorzugt ist im Rahmen der Erfindung, dass die Spindelmutter zu einem Rollgewindetrieb erweitert ist, um so eine zuverlässige Verstellung der Gewindestange zu gewährleisten.

Weiterhin bevorzugt ist es, wenn der Deckel des Gehäuses zum Anschluss an das Gestell der Werkzeugmaschine vorgesehen ist, um so die Lagerung der Arbeitsspindel zu entlasten und um eine Auswirkung der Anbindung des Stellmotors über den Riemenantrieb auf die Arbeitsspindel zu vermeiden.

Eine vorteilhafte Ausführungsform des Elektrospanners weist einen Schütz auf, der derart angeordnet ist, dass bei einem Spannungsausfall der Elektromotor kurzgeschlossen ist. Dadurch steht das Moment des Elektromotors zum Abbremsen der Drehbewegung der Arbeitsspindel zur Verfügung.

Bevorzugt enthält bei dem Elektrospanner der Elektromotor einen Schrittmotor, wobei der Schrittmotor den Vorteil aufweist, dass die Motorsteuerung gleichzeitig als ein Positionsgeber für die Spannstellung der Spannbacken verwendet werden kann. Auf diese Weise können zum Einen aufwendige Positionsgebersysteme eingespart werden und zum Anderen kann die Steuerung des Schrittmotors zusätzlich als ein Positionsgeber der Verstellung der Spannbacken ausgebildet sein, wodurch die Positionierung der Spannbacken von der Steuerung aus frei programmierbar wird.

Alternativ kann bei dem Elektrospanner der Elektromotor auch einen Servomotor enthalten. Bevorzugt ist der Servomotor für Drehzahlen bis zu 6500 U/min ausgelegt, wodurch eine besonders schnelle Bearbeitung möglich wird.

Bei einer weiteren vorteilhaften Ausführungsform des Elektrospanners ist mindestens ein Sensor in mindestens einer Spannbacke zur Erfassung der Spannkraft angeordnet, so dass während der Bearbeitung die Spannkraft exakt erfasst werden kann und durch die feine Verstellbarkeit des Elektromotors die Spannkraft besser nachjustiert oder gezielt verändert werden kann, wohingegen bei hydraulischen System dafür ein teures steuerbares Ventil notwendig ist.

Insbesondere kann auf diese Weise bei einer weiteren bevorzugten Ausführungsform des Elektrospanner mit einer entsprechenden Steuerung der Einfluss der der drehzahlabhängigen Fliehkraft auf die Spannkraft verringert beziehungsweise kompensiert werden, indem die Zugstangen gezielt verstellt werden.

Bevorzugt ist bei dem Elektrospanner eine an einem Bolzen entlangfahrbare Steuerungskurve in die Gewindestange eingebracht, so dass auch ein Einsatz als Schwenkspanner möglich ist.

Weiterhin kann zum Beispiel der Elektrospanner auf einem Werkzeugmaschinentisch oder einer Vorrichtungsgrundplatte montiert sein. Der Elektrospanner nach der vorliegenden Erfindung kann insbesondere bei Greifvorrichtungen, bei Robotern oder bei Handhabungssystemen mit diesen Greifvorrichtungen oder bei Werkzeugmaschinen eingesetzt werden.

Insgesamt ergibt sich als Vorteil des erfindungsgemäßen Elektrospanners ein geringer Energieaufwand zum Halten der Spannung und zur Nachspannung in dem Spannfutter, da der Spannvorgang auch mit Stellmotoren kleiner Leistung, hier von beispielsweise 600W für 25000N Zug- oder Druckkraft, realisiert werden kann. Als ein weiteres Beispiel kann ein Schrittmotor bei einer Spannung von 120 V und einem Moment von 2,2 Nm eine Zug- oder eine Druckkraft von 18 kN realisieren. Demzufolge kann der Gesamtwirkungsgrad von der aufgenommenen elektrischen Energie zu den Zug- oder Druckkräften ungefähr 40 Prozent betragen.

Da der Elektrospanner mit der Arbeitsspindel mitrotiert, kann die Belastung der eingesetzten Lager als sehr gering angesehen werden, die durch den Elektrospanner zudem nur einer geringen Erwärmung ausgesetzt sind. Mit anderen Worten ist die Belastung der eingesetzten Lager sehr gering, weil die Hauptlasten als statisch anzusehen sind. Da die Temperaturentwicklung in den Lagern und im gesamten Elektrospanner gering ist, bleibt auch der Einfluss auf die Werkstücke gering.

Bei einer Abstützeinheit in Verbindung mit dem Elektrospanner kann über die Steuerung ein Nachjustieren des Werkstückes erfolgen, wobei in Abhängigkeit von der Getriebeauslegung bei der Abstützeinheit eine auf 2 µm genaue reproduzierbare Positionierung möglich ist. Somit ermöglicht der Elektrospanner in Kombination mit der Abstützeinheit eine kostengünstige Möglichkeit zur Erfassung und Steuerung der Lage eines Werkstückes, wodurch die Bearbeitung verbessert wird.

Bei den Ausführungsbeispielen der vorliegenden Erfindung ist in den Figuren als Getriebe ein Kugellagergetriebe dargestellt, es können aber auch andere Getriebe zum Einsatz kommen. Ein Kugelumlaufgetriebe weist konstruktionsbedingt ein hohes lastfreies Rückdrehmoment auf. Dies bewirkt beim Reversionsbetrieb des Gewindetriebes eine Selbsthemmung bis zum dreifachen der Zug- oder Druckkraft. Somit ist diese in der Kombination der beiden Komponenten gespeichert.

Weiterhin ist aufgrund der Selbsthemmung des Elektrospanners im Vergleich zu einem hydraulischen oder einem pneumatischen System die Sicherheit verbessert.

Ein weiterer Vorteil besteht darin, dass im Vergleich zu einem hydraulischen oder einem pneumatischen System die Anzahl der Bauteile geringer ist, wobei die meisten Bauteile Standardkomponenten sind, so dass die Herstellungskosten verringert sind. Insbesondere Spannvorrichtungen können durch den Einsatz solcher Elektrospanner, wenn sie in einer Kleinserie gefertigt werden, sehr kostengünstig aufgebaut werden.

Unter Berücksichtigung des Platzbedarfes des Hydraulikaggregats benötigt der Elektrospanner einen geringeren Platzbedarf. Zusätzlich ergibt der kompaktere Aufbau ein geringeres Gewicht, wodurch die Handhabungssysteme und Roboter geringer belastet werden.

Im Folgenden wird die Erfindung an in der Zeichnung dargestellten Ausführungsbeispielen näher erläutert; es zeigen:

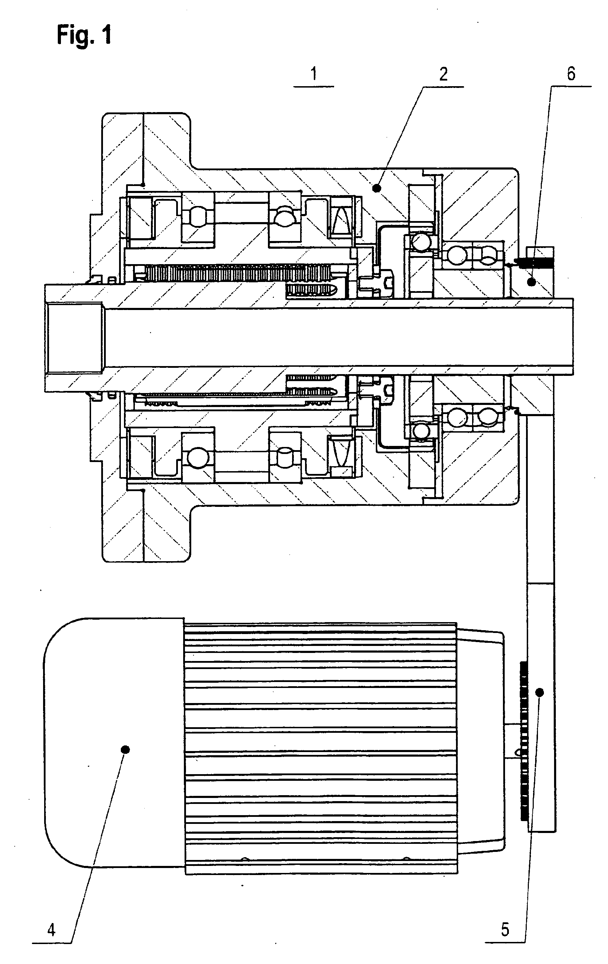

- Fig. 1: eine Seitenansicht, teilweise im Schnitt dargestellt, eines erfindungsgemäßen Elektrospanners,

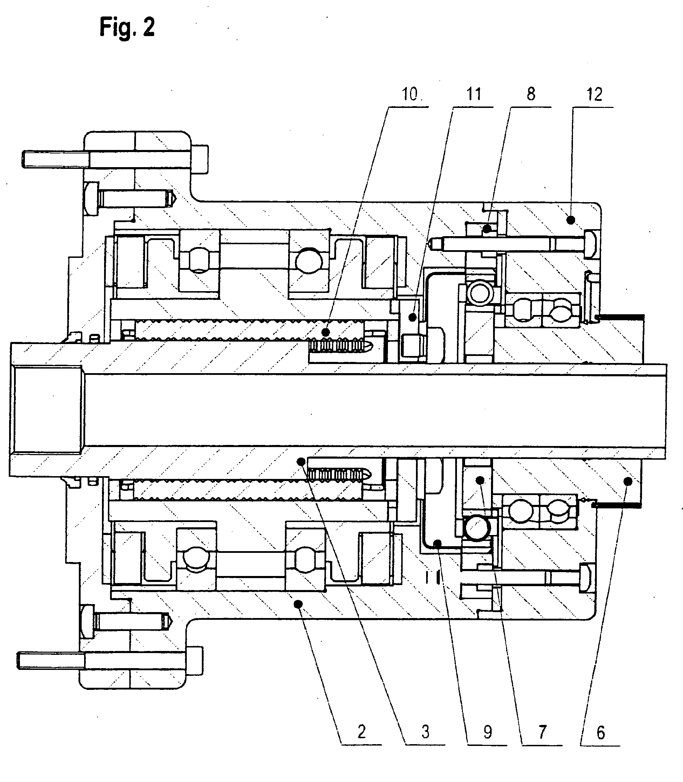

- Fig. 2: einen Längsschnitt des erfindungsgemäßen Elektrospanners, dargestellt ohne Anbindung an den Stellmotor,
- Fig. 3: eine der Fig. 1 entsprechende Darstellung des an dem Gestell der Werkzeugmaschine angeschlossenen Gehäuses des Elektrospanners,
- Fig. 4: eine Seitenansicht im Schnitt eines weiteren Ausführungsbeispiels des erfindungsgemäßen Elektrospanners für eine Spannvorrichtung bei Werkzeugmaschinen oder eine Abstützeinheit, und
- Fig. 5: eine Seitenansicht im Schnitt eines anderen Ausführungsbeispiels des erfindungsgemäßen Elektrospanners für Greifvorrichtungen bei Robotern oder Handhabungssystemen.

In der Zeichnung ist ein Elektrospanner 1 dargestellt, der dazu genutzt wird, die Spannbacken eines an einer Werkzeugmaschine befestigten Spannfutters zu verstellen und während des Spannvorganges dauerhaft sicher gegenüber dem Werkstück oder Werkzeug zu spannen. Dazu ist der Elektrospanner 1 mit einem an der Arbeitsspindel einer Werkzeugmaschine befestigten Gehäuse 2 versehen, in dem axial verstellbar eine Gewindestange 3 zur Verstellung der Spannbacken des Spannfutters gelagert ist. Weiterhin umfasst der Elektrospanner 1 einen elektrischen Stellmotor 4, der seitlich neben dem Gehäuse 2 angeordnet und über ein Riementrieb 5 mit einem Antriebsrad 6 verbunden ist, das mit dem Rotor des Stellmotors 4 in Antriebsverbindung steht. Die besondere Praxistauglichkeit des Elektrospanners 1 ergibt sich dadurch, dass das Antriebsrad 6 mit dem Wellengenerator 7 eines Gleitkeilgetriebes (harmonic drive) und das Hohlrad 8 des Gleitkeilgetriebes (harmonic drive) mit dem Gehäuse 2 verbunden ist, und dass die eine Außenverzahnung aufweisende Stahlbüchse (Flexspline) 9 des Gleitkeilgetriebes (harmonic drive) als Antrieb für die Gewindestange 3 vorgesehen ist, und zwar bei dem in der Zeichnung dargestellten Ausführungsbeispiel über die Vermittlung eines Rollgewindetriebes 10, das selbstverständlich aber auch als Kugelgewindetrieb oder einfach nur als Spindelmutter gestaltet sein kann.

Die eine Außenverzahnung aufweisende Stahlbüchse (Flexspline) 9 ist über eine Spiel aufweisende Klauenkupplung 11 mit dem Rollgewindetrieb 10 verbunden.

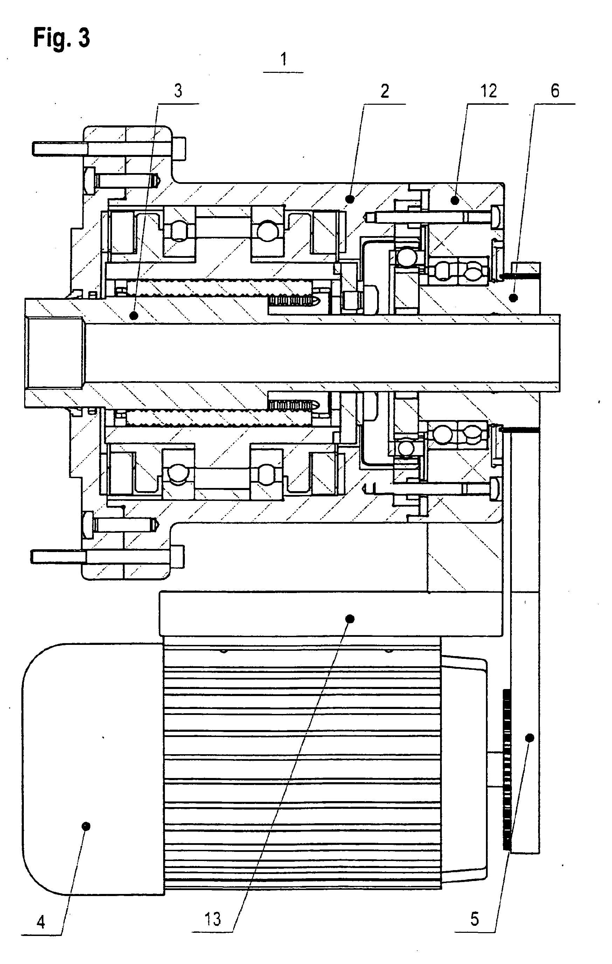

Fig. 3 zeigt ein Ausführungsbeispiel, bei dem der Deckel 12 des Gehäuses 2 an dem Gestell 13 der Werkzeugmaschine befestigt ist, so dass die Lagerung der Arbeitsspindel nicht durch die Präsenz des Stellmotors 4 beeinträchtigt wird.

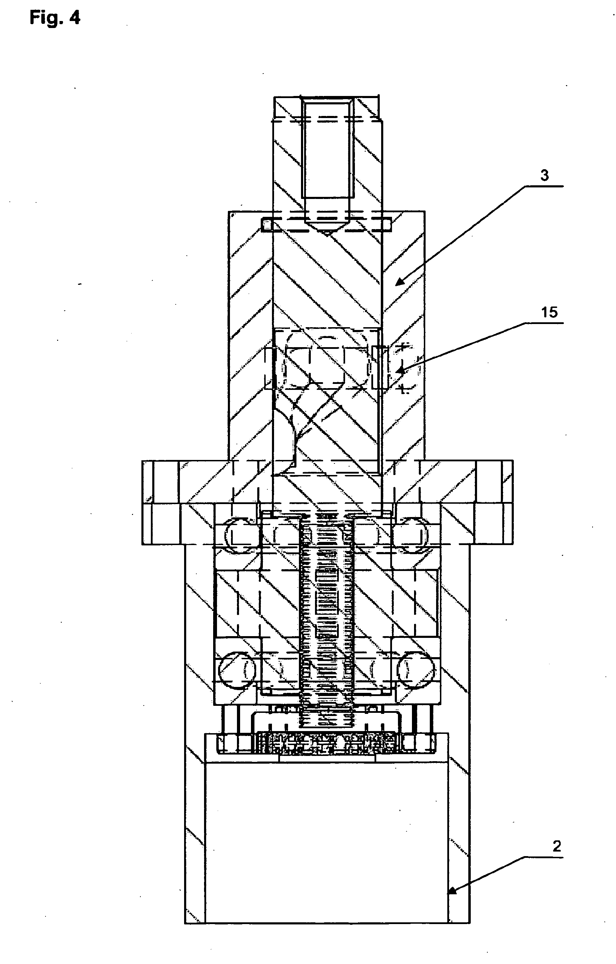

In Fig. 4 ist ein weiteres Ausführungsbeispiel des Elektrospanners 1 gezeigt, der als Spanner für Spanneinrichtungen von Werkzeugmaschinen oder als eine Abstützeinheit ausgestaltet ist. Der Elektromotor 4 umfasst einen Schrittmotor oder einen Servomotor, der auf Drehzahlen bis 5000 U/min ausgelegt ist. Dieser Motor dient als ein Regelungsglied für die Spannkraft und als ein Antrieb für die Axialverstellung, wobei der Motor über ein Getriebe mit einer Flanschmutter verbunden sein kann.

Zum Beispiel ist der Elektrospanner 1 auf einem Werkzeugmaschinentisch oder einer Vorrichtungsgrundplatte angeordnet. Als Getriebe ist in der Fig. 4 ein Kugellagergetriebe dargestellt, es können aber auch andere Getriebe zum Einsatz kommen. Wie in der Fig. 4 dargestellt ist, ist ein Motorläufer mit dem Wellengenerator des Kugellagergetriebes gekoppelt, wobei die Übersetzung 20 bis 200 zu 1 beträgt.

Das kleine Moment und die hohen Drehzahlen des Motors werden in ein großes Moment und niedrige Drehzahlen umgewandelt. Da das Hohlrad des Kugellagergetriebes mit dem Gehäuse 2 fest verbunden ist, arbeitet die eine Außenverzahnung aufweisende Stahlbüchse 9 (Flexspline) in der umgekehrten Drehrichtung zum Elektromotor als Antrieb für den Rollgewindetrieb (beziehungsweise Kugelgewindetrieb). Dieser bewegt die Gewindestange 3 in axialer Richtung vor beziehungsweise zurück und spannt oder löst eine auf der Spindel angebrachte Spannpratze.

Die Spannkraft kann über eine Steuerung des Elektromotors während der Bearbeitung der Werkstücke nachjustiert oder gezielt verstellt werden. Bei einer Abstützeinheit in Verbindung mit dem Elektrospanner kann über die Maschinensteuerung ein Nachjustieren des Werkstückes erfolgen.

Über einen nicht dargestellten Schütz wird der Motor bei Ausfall der Spannungsversorgung kurzgeschlossen. Auf diese Weise steht das Moment des Motors zum Abbremsen der Drehbewegung der Arbeitsspindel zur Verfügung.

Die Abstützeinheit kann in Abhängigkeit von dem Getriebe reproduzierbar auf 2 µm genau positioniert werden.

Das Kugelumlaufgetriebe weist aufgrund seiner Bauweise ein hohes lastfreies Rückdrehmoment auf. Dies bewirkt beim Reversionsbetrieb des Gewindetriebes eine Selbsthemmung bis zu dem zweifachen der Zugkraft oder der Druckkraft. Somit wird diese in Kombination der beiden Komponenten gespeichert.

Die Kupplung zwischen Motor und Getriebe kann ein Spiel aufweisen, wodurch bei Selbsthemmung der Spannung durch den entstehenden Schlag das Öffnen erleichtert wird.

Alternativ kann die Verbindung starr sein, um eine hohe Genauigkeit zu sichern.

Eine Steuerungskurve 15 in der Gewindestange 3 ermöglicht den Einsatz als Schwenkspanner, wobei die Steuerungskurve 15 an einem Bolzen entlangfahrbar ausgestaltet ist.

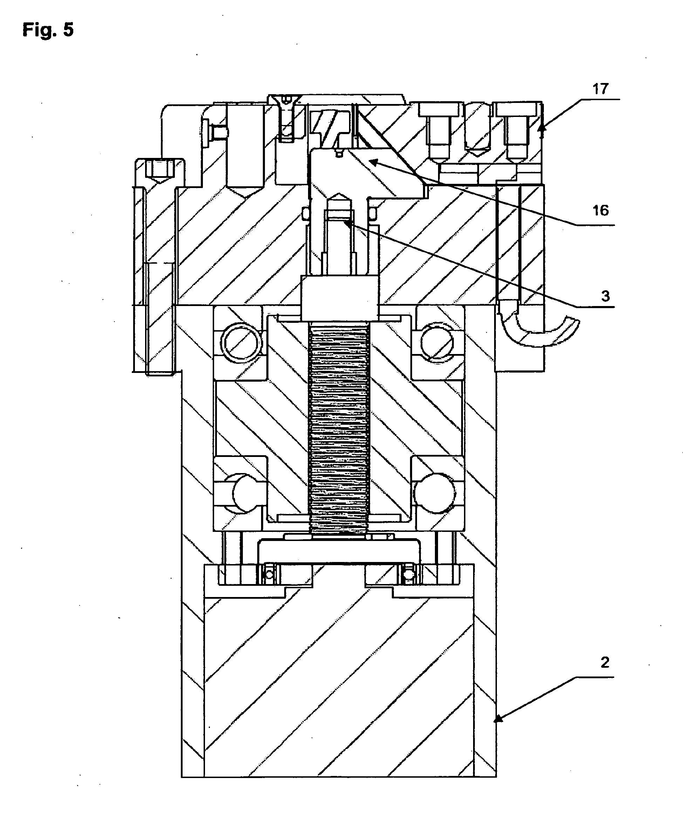

Fig. 5 zeigt eine andere Ausführungsform des Elektrospanners für Spannvorrichtungen beziehungsweise Greifvorrichtungen für Roboter und Handhabungssysteme, wobei sie auch mit einem HSK-Aufsatz an Werkzeugmaschinenspindel als Handhabung verwendet werden.

Bei dieser Ausführungsform umfasst der Elektromotor einen Schrittmotor oder einen Servomotor, der auf Drehzahlen bis 6500 U/min ausgelegt ist. Der Motor dient als Regelungsglied für die Spannkraft und als Antrieb für die Axialverstellung. Der Schrittmotor weist den Vorteil auf, dass die Motorsteuerung gleichzeitig als ein Positionsgeber für die Spannstellung der Spannbacken verwendet werden kann. Auf diese Weise können aufwendige Positionsgebersystem eingespart werden. Weiterhin ist somit die Positionierung von der Steuerung aus frei programmierbar.

Der Motor ist über ein Getriebe mit einer Flanschmutter verbunden. Die Greifvorrichtung ist zum Beispiel auf einem Roboter oder einem Handhabungssystem angebracht. Wie bei der vorhergehenden Ausführungsform können neben dem dargestellten Kugellagergetriebe auch andere Getriebe verwendet werden.

Ein Motorläufer ist mit dem Wellengenerator des Kugellagergetriebes gekoppelt, das eine Übersetzung von 20 bis 200 zu 1 aufweist. Das kleine Moment und die hohen Drehzahlen des Motors werden in ein großes Moment und niedrige Drehzahlen umgewandelt. Da das Hohlrad des Kugellagergetriebes mit dem Gehäuse 2 des Elektrospanners 1 fest verbunden ist, arbeitet die eine Außenverzahnung aufweisende Stahlbüchse 9 (Flexspline) in der umgekehrten Drehrichtung zum Elektromotor als Antrieb für den Rollgewindetrieb (beziehungsweise Kugelgewindetrieb). Dieser bewegt die Gewindestange 3 in axialer Richtung vor beziehungsweise zurück und betätigt über ein Keilbackengetriebe 16, das mit der Gewindestange 3 verbunden ist, die Spannbacken 17. Die Spannkraft kann über die Motorsteuerung während der Bearbeitung nachjustiert oder gezielt bearbeitet werden.

Über einen nicht dargestellten Schütz wird der Motor bei Ausfall der Spannungsversorgung kurzgeschlossen. Auf diese Weise stellt der Motor ein Moment gegen den Reversionsbetrieb des Rollgewindes bereit. Die Greifvorrichtung kann in Abhängigkeit von der Getriebeauslegung reproduzierbar auf 5 µm genau positioniert werden.

Das Kugelumlaufgetriebe weist aufgrund seiner Bauweise ein hohes lastfreies Rückdrehmoment auf. Dies bewirkt beim Reversionsbetrieb des Gewindetriebes bei dieser Ausführungsform eine Selbsthemmung bis zu dem dreifachen der Zugkraft oder der Druckkraft. Somit wird diese in Kombination der beiden Komponenten gespeichert.

Auch bei dieser Ausführungsform kann die Kupplung zwischen Motor und Getriebe ein Spiel aufweisen, wodurch bei Selbsthemmung der Spannung durch den entstehenden Schlag das Öffnen erleichtert wird. Alternativ kann die Verbindung auch starr sein, um eine hohe Genauigkeit zu sichern.

## Patentansprüche

1. Elektrospanner mit einem an der Arbeitsspindel einer Werkzeugmaschine befestigbaren Gehäuse (2), in dem axial verstellbar eine Gewindestange (3) zur Verstellung der Spannbacken eines Spannfutters gelagert ist, und mit einem elektrischen Stellmotor (4), dessen Rotor in Antriebsverbindung mit einem Antriebsrad (6) steht, **dadurch gekennzeichnet, dass** das Antriebsrad (6) mit dem Wellengenerator (7) eines Gleitkeilgetriebes und das Hohlrad (8) des Gleitkeilgetriebes mit dem Gehäuse (2) verbunden ist, und dass eine eine Außenverzahnung aufweisende Stahlbüchse (9) des Gleitkeilgetriebes als Antrieb für die der Gewindestange (3) zugeordnete Spindelmutter vorgesehen ist.

2. Elektrospanner nach Anspruch 1, **dadurch gekennzeichnet, dass** das Gleitkeilgetriebe eine Übersetzung von 20 bis 200 zu 1 aufweist.

3. Elektrospanner nach Anspruch 1 oder 2, **dadurch gekennzeichnet, dass** der Elektromotor (4) seitlich neben dem Gehäuse (2) angeordnet ist.

4. Elektrospanner nach Anspruch 3, **dadurch gekennzeichnet, dass** der Elektromotor (4) über einen Riementrieb (5) mit dem Antriebsrad (6) verbunden ist.

5. Elektrospanner nach einem der vorhergehenden Ansprüche, **dadurch gekennzeichnet, dass** die eine Außenverzahnung aufweisende Stahlbüchse (9) über eine Klauenkupplung (11) mit der Spindelmutter gekuppelt ist.

6. Elektrospanner nach Anspruch 5, **dadurch gekennzeichnet, dass** die Klauenkupplung (11) mit einem Spiel versehen ist.

7. Elektrospanner nach einem der Ansprüche 1 bis 4, **dadurch gekennzeichnet, dass** die eine Außenverzahnung aufweisende Stahlbüchse (9) starr mit der Spindelmutter gekuppelt ist.

8. Elektrospanner nach einem der Ansprüche 1 bis 7, **dadurch gekennzeichnet, dass** die Spindelmutter zu einem Rollgewindetrieb (16) erweitert ist.

9. Elektrospanner nach einem der Ansprüche 1 bis 8, **dadurch gekennzeichnet, dass** der Deckel (12) des Gehäuses (2) zum Anschluss an das Gestell (13) der Werkzeugmaschine vorgesehen ist.

10. Elektrospanner nach einem der vorhergehenden Ansprüche, **gekennzeichnet durch** einen Schütz, der derart angeordnet ist, dass bei einem Spannungsausfall der Elektromotor (4) kurzgeschlossen ist.

11. Elektrospanner nach einem der vorhergehenden Ansprüche, **dadurch gekennzeichnet, dass** der Elektromotor (4) einen Schrittmotor aufweist.

12. Elektrospanner nach Anspruch 11, **dadurch gekennzeichnet, dass** eine Steuerung des Schrittmotors zusätzlich als ein Positionsgeber der Verstellung der Spannbacken ausgebildet ist.

13. Elektrospanner nach einem der Ansprüche 1 bis 10, **dadurch gekennzeichnet, dass** der Elektromotor (4) einen Servomotor aufweist.

14. Elektrospanner nach Anspruch 13, **dadurch gekennzeichnet, dass** der Servomotor für Drehzahlen bis zu 6500 U/min ausgestaltet ist.

15. Elektrospanner nach einem der vorhergehenden Ansprüche, **dadurch gekennzeichnet, dass** mindestens ein Sensor in mindestens einer Spannbacke zur Erfassung der Spannkraft angeordnet ist.

16. Elektrospanner nach Anspruch 15, **gekennzeichnet durch** eine Steuerung zur Verstellung der Spannbacken in Abhängigkeit von den Sensordaten.

17. Elektrospanner nach einem der vorhergehenden Ansprüche, **dadurch gekennzeichnet, dass** eine an einem Bolzen entlangfahrbare Steuerungskurve (15) in die Gewindestange (3) eingebracht ist.

18. Elektrospanner nach einem der vorhergehenden Ansprüche, **dadurch gekennzeichnet, dass** die Spannbacken (17) über ein Keilhackengetriebe (16) betätigbar sind, das mit der Gewindestange (3) verbunden ist.

19. Greifvorrichtung mit einem Elektrospanner nach einem der vorhergehenden Ansprüche.

20. Roboter oder Handhabungssystem mit einer Greifvorrichtung nach Anspruch 19.

21. Werkzeugmaschine mit einem Elektrospanner nach einem der Ansprüche 1 bis 18.

## Claims

1. An electric clamping device comprising a housing (2) which can be fattened to the working spindle of a machine tool and in which a threaded rod (3) for displacement of the jaws of a clamping chuck is axially displaceably mounted, and an electric actuating motor (4) whose rotor is drivingly connected to a drive wheel (6), **characterised in that** the drive wheel (6) is connected to the wave generator (7) of a harmonic drive and the hollow gear (8) of the harmonic drive is connected to the housing (2), and that a steel sleeve (9) of the harmonic drive, that has an external tooth arrangement, is provided as the drive for the spindle nut associated with the threaded rod (3).

2. An electric clamping device according to claim 1 **characterised in that** the harmonic drive has a transmission ratio of 20 to 200 to 1.

3. An electric clamping device according to claim 1 or claim 2 **characterised in that** the electric motor (4) is arranged laterally beside the housing (2).

4. An electric clamping device according to claim 3 **characterised in that** the electric motor (4) is connected to the drive wheel (6) by way of a belt drive (5).

5. An electric clamping device according to one of the preceding claims **characterised in that** the steel sleeve (9) having an external tooth arrangement is coupled to the spindle nut by way of a dog clutch (11).

6. An electric clamping device according to claim 5 **characterised in that** the dog clutch (11) is provided with a play.

7. An electric clamping device according to one of claims 1 to 4 **characterised in that** the steel sleeve (9) having an external tooth arrangement is rigidly coupled to the spindle nut.

8. An electric clamping device according to one of claims 1 to 7 **characterised in that** the spindle nut is expanded to afford a roll thread drive (16).

9. An electric clamping device according to one of claims 1 to 8 **characterised in that** the cover (12) of the housing (2) is provided for connection to a frame (13) of the machine tool.

10. An electric clamping device according to one of the preceding claims **characterised by** a contactor device so arranged that the electric motor (4) is short-circuited upon a voltage failure.

11. An electric clamping device according to one of the preceding claims **characterised in that** the electric motor (4) has a stepping motor.

12. An electric clamping device according to claim 11 **characterised in that** a control means for the stepping motor is additionally in the form of a position sender for the displacement of the jaws.

13. An electric clamping device according to one of claims 1 to 10 **characterised in that** the electric motor (4) has a servo motor.

14. An electric clamping device according to claim 13 **characterised in that** the servo motor is designed for rotary speeds of up to 6500 rpm.

15. An electric clamping device according to one of the preceding claims **characterised in that** at least one sensor is arranged in at least one jaw for detecting the clamping force.

16. An electric clamping device according to claim 15 **characterised by** a control means for displacement of the jaws in dependence on the sensor data.

17. An electric clamping device according to one of the preceding claims **characterised in that** a control cam (15) movable along a pin is introduced into the threaded rod (3).

18. An electric clamping device according to one of the preceding claims **characterised in that** the jaws (17) are actuable by way of a wedge jaw drive (16) connected to the threaded rod (3).

19. A gripping apparatus comprising an electric clamping device according to one of the preceding claims.

20. A robot or handling system having a gripping apparatus according to claim 19.

21. A machine tool having an electric clamping device according to one of claims 1 to 18.

## Revendications

1. Organe de serrage électrique, comprenant un carter (2) qui peut être fixé à la broche d'usinage d'une machine-outil et dans lequel une vis (3), destinée à déplacer les mors de serrage d'un mandrin de serrage, est montée avec possibilité de déplacement axial, et comprenant un moteur d'actionnement (4) électrique dont le rotor est en liaison d'entraînement avec une roue d'entraînement (6), **caractérisé par le fait que** la roue d'entraînement (6) est reliée au générateur d'onde (7) d'un engrenage de type à clavette coulissante, ou réducteur harmonique, et la roue à denture intérieure (8) du réducteur harmonique est reliée au carter (2), et **par le fait qu'**une douille d'acier (9) du réducteur harmonique, dotée d'une denture extérieure, est prévue en tant que moyen d'entraînement pour l'écrou de vis associé à la vis (3).

2. Organe de serrage électrique selon la revendication 1, **caractérisé par le fait que** le réducteur harmonique présente un rapport de réduction de 20 à 200 : 1.

3. Organe de serrage électrique selon la revendication 1 ou 2, **caractérisé par le fait que** le moteur électrique (4) est disposé latéralement à côté du carter (2).

4. Organe de serrage électrique selon la revendication 3, **caractérisé par le fait que** le moteur électrique (4) est relié par un mécanisme à courroie (5) à la roue d'entraînement (6).

5. Organe de serrage électrique selon une des revendications précédentes, **caractérisé par le fait que** la douille d'acier (9) présentant une denture extérieure est accouplée à l'écrou de vis par l'intermédiaire d'un moyen d'accouplement à griffes (11).

6. Organe de serrage électrique selon la revendication 5, **caractérisé par le fait que** le moyen d'accouplement à griffes (11) est doté d'un jeu.

7. Organe de serrage électrique selon une des revendications 1 à 4, **caractérisé par le fait que** la douille d'acier (9) présentant une denture extérieure est accouplée de manière rigide à l'écrou de vis.

8. Organe de serrage électrique selon une des revendications 1 à 7, **caractérisé par le fait que** l'écrou de vis peut être complété pour obtenir une vis d'entraînement à roulement (16).

9. Organe de serrage électrique selon une des revendications 1 à 8, **caractérisé par le fait que** le couvercle (12) du carter (2) est prévu pour être raccordé au bâti (13) de la machine-outil.

10. Organe de serrage électrique selon une des revendications précédentes, **caractérisé par le fait qu'**il comprend un contacteur qui est disposé de manière à court-circuiter le moteur électrique (4) en cas d'absence de courant.

11. Organe de serrage électrique selon une des revendications précédentes, **caractérisé par le fait que** le moteur électrique (4) présente un moteur pas à pas.

12. Organe de serrage électrique selon la revendication 11, **caractérisé par le fait qu'**une commande du moteur pas à pas est en plus réalisée comme capteur de position du déplacement des mors de serrage.

13. Organe de serrage électrique selon une des revendications 1 à 10, **caractérisé par le fait que** le moteur électrique (4) présente un servomoteur.

14. Organe de serrage électrique selon la revendication 13, **caractérisé par le fait que** le servomoteur est conçu pour des vitesses de rotation allant jusqu'à 6 500 tr/min.

15. Organe de serrage électrique selon une des revendications précédentes, **caractérisé par le fait qu'**au moins un capteur est disposé dans au moins un mors de serrage pour mesurer la force de serrage.

16. Organe de serrage électrique selon la revendication 15, **caractérisé par le fait qu'**il comprend une commande pour régler les mors de serrage en fonction des données de capteur.

17. Organe de serrage électrique selon une des revendications précédentes, **caractérisé par le fait qu'**une came de commande (15), pouvant être déplacée le long d'un axe, est disposée dans la vis (3).

18. Organe de serrage électrique selon une des revendications précédentes, **caractérisé par le fait que** les mors de serrage (17) peuvent être actionnés par un mécanisme à clavette (16) qui est relié à la vis (3).

19. Dispositif de préhension comprenant un organe de serrage électrique selon une des revendications précédentes.

20. Robot ou système de manipulation comprenant un dispositif de préhension selon la revendication 19.

21. Machine-outil comprenant un organe de serrage électrique selon une des revendications 1 à 18.
